# EUROPÄISCHE PATENTSCHRIFT

(11) **EP 3 881 413 B1**
(45) Veröffentlichungstag und Bekanntmachung des Hinweises auf die Patenterteilung: **12.03.2025**
(21) Anmeldenummer: 20700367.4
(22) Anmeldetag: 09.01.2020
(51) Int. Cl.: H02K 5/04, H02K 5/15, H02K 11/33

(54) **ELEKTRISCHE MASCHINE**
ELECTRIC MOTOR
MACHINE ÉLECTRIQUE

(30) Priorität: 10.01.2019 DE 102019200254
(43) Veröffentlichungstag der Anmeldung: 22.09.2021
(73) Patentinhaber: Brose Fahrzeugteile SE & Co. Kommanditgesellschaft, Würzburg, 97076 Würzburg (DE)
(72) Erfinder: MANGER, Steffen, 97332 Volkach (DE); BÜCHNER, Sven Anton, 97723 Frankenbrunn (DE); NELSON, Benjamin, 97337 Dettelbach (DE); WINTER, Florian, 97762 Hammelburg (DE); FESER, Anna, 97250 Erlabrunn (DE); REIHER, Steffen, 97618 Strahlungen (DE); GOEKE, Christof, 97076 Würzburg (DE); BALSAM, Marcus, 97199 Ochsenfurt (DE)
(74) Vertreter: FDST Patentanwälte
(86) Internationale Anmeldenummer: PCT/EP2020/050409
(87) Internationale Veröffentlichungsnummer: WO 2020/144266

(56) Entgegenhaltungen:
- WO-A1-2008/019818
- WO-A2-2009/083363
- DE-A1- 2 546 666
- GB-A- 2 061 775
- US-A1- 2014 028 128

## Beschreibung

Die Erfindung betrifft eine elektrische Maschine, insbesondere einen Elektromotor.

Elektrische Maschinen, insbesondere Elektromotoren sind üblicherweise als sogenannte Innenläufer- oder Außenläufer-Motoren ausgebildet. Dies beschreibt die Anordnung des von wechselnden Magnetfeldern in Drehung versetzten Rotors bezüglich des die Magnetfelder hervorgerufenen Stators. Beim Innenläufer-Motor ist dieser Rotor (auch als "Läufer" bezeichnet) koaxial zu und radial innerhalb des Stators angeordnet. Beim Außenläufer-Motor ist der Rotor entsprechend umgekehrt um den feststehenden Stator rotierbar, insbesondere rohrartig diesen umgreifend angeordnet.

Üblicherweise sind elektrische Maschinen, konkret Elektromotoren mit einem Gehäuse eingehaust, das einerseits Schutz vor Umwelteinflüssen bietet (sowie insbesondere beim Außenläufer-Motor den Zugriff auf rotierende Teile verhindert) und andererseits auch Befestigungspunkte für weitere Bauelemente vorgibt. Derartige Bauelemente sind beispielsweise abtriebsseitig an den Rotor angeschlossene Getriebe oder sonstige angetriebene Elemente, beispielsweise mittelbar oder unmittelbar angetriebene Pumpen, eine Motorelektronik oder dergleichen. Um Bauraum einzusparen, können Innenläufer-Motoren auch im Wesentlichen gehäuselos, zumindest ohne ein den Stator umgebendes, wenigstens abschnittsweise rohrartiges Gehäuse ausgebildet sein. Beispielsweise kann ein solcher Innenläufer-Motor auch (bspw. zu Kühlungszwecken) mit einer Flüssigkeit, insbesondere Öl durchflutet sein. In diesem (gehäuselosen) Fall sind an dem üblicherweise durch ein laminiertes Blechpaket gebildeten Stator Befestigungspunkte angeordnet, an denen beispielsweise das nachgeordnete Getriebe und/oder stirnseitig zum Stator angeordnete Lagerschilde angebunden werden können.

Häufig ist die Motorelektronik in einem solchen Fall räumlich von der durch den Stator und den vorstehend beschriebenen Bauelementen gebildeten Baugruppe separiert platziert und über einen Kabelbaum mit dieser Baugruppe verbunden.

**In** WO 2008/019818 A1 ist eine Statoranordnung fiir ein Pumpenaggregat beschrieben, mit einem Statorgehäuse und einem darin angeordneten Stator. Zumindest ein Verriegelungselement ist dabei vorgesehen, mittels welchem der Stator in dem Statorgehäuse fixiert ist.

**In** WO 2009/083363 A2 ist ein Elektromotor mit einem Stator beschrieben, der durch Aufeinanderstapeln von Lamellen gebildet ist, einem Rotor sowie einem vorderen Lagerschild und einem hinteren Lagerschild, die an der Vorder- und Rückseite des Stators angebracht sind, um den Rotor zu tragen. Der vordere und der hintere Lagerschild sind dabei separat an dem Statorstapel befestigt, ohne dass sie durch Befestigungsmittel aneinander befestigt werden, wodurch der Abstand zwischen den Lagergehäusen, die in den Lagerschilden angeordnet sind und den Rotor tragen, unabhängig von der Variabilität der Höhe des Statorstapels wird.

In DE 25 46 666 ist eine elektrische Maschine mit einem Ständer aus durch Verbindungsmittel gehaltenen Blechen beschrieben, mit einem Läufer und mit Lagerflanschen, die mit auf den Umfang des Ständers geschweißten Befestigungslappen versehen sind. Die Befestigungslappen der Lagerflansche sind dabei in annähernd radialer Ausrichtung mit den Verbindungsmitteln befestigt.

Der Erfindung liegt die Aufgabe zugrunde, eine verbesserte elektrische Maschine anzugeben.

Diese Aufgabe wird erfindungsgemäß gelöst durch eine elektrische Maschine mit den Merkmalen des Anspruchs zuvor 1. Vorteilhafte und teils für sich erfinderische Ausführungsformen und Weiterbildungen der Erfindung sind in den Unteransprüchen und der nachfolgenden Beschreibung dargelegt.

Die erfindungsgemäße elektrische Maschine ist als Innenläufer(-Motor) ausgebildet und stellt vorzugsweise einen Elektromotor dar. Die elektrische Maschine umfasst ein Stator-Blechpaket sowie einen Funktionsträger, der an einer Abtriebsseite (im Folgenden auch als A-Seite bezeichnet) des Stator-Blechpakets abgewandten Rückseite (auch als B-Seite bezeichnet) angeordnet ist. Der Funktionsträger weist dabei ein Kunststoffgehäuse auf, in dem ein Schaltungsträger angeordnet ist. Vorzugsweise bildet dieser Schaltungsträger mit darauf angeordneten elektronischen Bauelementen eine Motorsteuerung (oder: "Steuerelektronik") der elektrischen Maschine. Ferner umfasst der Funktionsträger in das Kunststoffgehäuse eingebundene und von diesem in axialer Richtung des Stator-Blechpakets vorstehende Verbindungsmittel. Der Funktionsträger ist dabei mittels dieser Verbindungsmittel an einer Mantelaußenfläche des Stator-Blechpakets in Axialrichtung formschlüssig und/oder stoffschlüssig an das Stator-Blechpaket angebunden.

Die stoffschlüssige Anbindung ist derart gestaltet, dass keine separat zu montierenden Befestigungselemente, insbesondere keine in Radialrichtung vorstehenden Zusatzelemente (insbesondere Schrauben oder dergleichen) zum Einsatz kommen.

Dadurch, dass der Funktionsträger direkt an das Stator-Blechpaket angebunden ist, kann vorteilhafterweise ein das Stator-Blechpaket an seiner Mantelaußenfläche umgebendes Stator-Gehäuse, an dem auch der Funktionsträger angeschlagen ist, entfallen. Dadurch kann die elektrische Maschine kompakt und vorteilhafterweise auch kostengünstig hergestellt werden.

Für den Fall, dass die Motorsteuerung in das Kunststoffgehäuse des Funktionsträgers integriert ist, kann zudem auch eine Zusatzschnittstelle zur räumlich weitreichenden (elektrischen und gegebenenfalls auch mechanischen) Verbindung zwischen dem Stator-Blechpaket und der Motorsteuerung entfallen.

**In** einer bevorzugten Ausführung ist der Funktionsträger radial gegenüber dem Stator-Blechpaket zentriert.

Besonders bevorzugt ist der Funktionsträger dabei mittels insbesondere am Kunststoffgehäuse ausgebildeten (vorzugsweise spritzgegossen) Zentrierrippen (oder -stegen) gegenüber dem Stator-Blechpaket oder einem an dessen Rückseite angeordneten, sogenannten B-seitigen Lagerschild zentriert. Zusätzlich oder alternativ erfolgt die Zentrierung mittels der Verbindungsmittel (insbesondere gegenüber dem Stator-Blechpaket) selbst zentriert.

Die Verbindungsmittel sind durch mehrere Metalllaschen gebildet, die in das Kunststoffgehäuse des Funktionsträgers spritzgießtechnisch eingebettet sind. Mithin ist das Kunststoffgehäuse aus einem thermoplastischen Kunststoff spritzgegossen und die Metalllaschen bilden dabei sogenannte Einleger, die mit dem Kunststoff des Kunststoffgehäuses umspritzt sind. Vorzugsweise handelt es sich bei den Metalllaschen um vergleichsweise flache - oder auch: dünne - Laschen aus einem Metallblech - die mit ihrer Flachseite an dem Stator-Blechpaket, konkret an dessen Mantelaußenfläche anliegen. Des Weiteren sind die Metalllaschen auf der Mantelaußenfläche des Stator-Blechpakets mit diesem verschweißt. Dadurch wird ein in Radialrichtung des Stator-Blechpakets gesehen platzsparender Aufbau der elektrischen Maschine erreicht. Außerdem können so zusätzliche Verbindungselemente, beispielsweise Schrauben und/oder Muttern entfallen.

Alternativ sind die Metalllaschen nicht von dem Kunststoff umspritzt, sondern nachträglich in das Kunststoffgehäuse eingepresst, mittels Ultraschall in das Kunststoffgehäuse versenkt oder dergleichen.

Das Stator-Blechpaket weist für jede Metalllasche eine radial vorstehende Kontaktfläche auf. Vorzugsweise ist die jeweilige radial vorstehende Kontaktfläche als eine Art Plateau ausgebildet, die über den Hauptkörper des Stator-Blechpakets vorsteht.

Des Weiteren sind die Metalllaschen durch in axialer Richtung abgewinkelte "Strahlen" oder "Arme" eines einstückigen, sternartigen Blechstanzteils gebildet. Das Zentrum, an dem die Strahlen zusammenlaufen, dieses Blechstanzteils ist dabei stirnseitig zu dem Stator-Blechpaket angeordnet (vorzugsweise senkrecht zur Rotationsachse des Rotors). Diese einstückige Ausbildung der Metalllaschen vereinfacht dabei die Herstellung des Funktionsträgers, konkret das Positionieren und Einspritzen der Metalllaschen in das Kunststoffgehäuse.

**In** einer zweckmäßigen Ausführung ist der Funktionsträger in axialer Richtung gegen das Stator-Blechpaket oder den B-seitigen Lagerschild angeschlagen. Vorzugsweise weist hierzu der Funktionsträger und/oder das Stator-Blechpaket bzw. der B-seitige Lagerschild eine entsprechende Anschlagfläche auf. Dadurch kann auf einfache Weise die axiale Position des Funktionsträgers zu dem Stator-Blechpaket vorgegeben werden.

**In** einer alternativen Ausführung ist der Funktionsträger in axialer Richtung gesehen zu der Rückseite des Stator-Blechpakets oder zu dem B-seitigen Lagerschild beabstandet. In diesem Fall wird in einer zweckmäßigen Variante der Funktionsträger bei der Montage der elektrischen Maschine zunächst auf Anschlag gegen den B-seitigen Lagerschild oder das Stator-Blechpaket aufgeschoben und anschließend geringfügig um eine vorgegebene Strecke zurückgezogen. Optional sind in diesem Fall in den Metalllaschen Fanghaken oder ähnliche Raststrukturen - beispielsweise eine Öse, Einschnitte oder dergleichen - ausgeformt, mit denen sich die jeweilige Metalllasche an einer vorzugsweise an der Kontaktfläche des Stator-Blechpakets angeordneten Fangstruktur, beispielsweise einem Pin oder dergleichen verfängt. Insbesondere wird in diesem Fall der Funktionsträger mit der jeweiligen Metalllasche zunächst "zu weit" über diesen Pin aufgeschoben, sodass sich dieser beim Zurückziehen des Funktionsträgers in der fanghakenartigen Struktur der jeweiligen Metalllasche verfängt, wenn der bestimmungsgemäße Abstand zwischen dem Funktionsträger dem Stator-Blechpaket erreicht ist.

In einer bevorzugten Ausführung umfasst die elektrische Maschine auch den vorstehend beschriebenen B-seitigen Lagerschild. Der B-seitige Lagerschild ist dabei aus Metall (insbesondere einem Metallblech) gefertigt und weist - insbesondere ebenfalls in axialer Richtung umgebogene - Montagelaschen auf, die auf der Mantelaußenseite des Stator-Blechpakets aufliegen und mit diesem verschweißt sind. Vorzugsweise sind diese Montagelaschen dabei unterhalb der Metalllaschen des Funktionsträgers - d. h. zwischen der Mantelaußenfläche und den Metalllaschen - angeordnet. Besonders bevorzugt erstrecken sich diese Montagelaschen dabei in axialer Richtung kürzer als die Metalllaschen des Funktionsträgers über die Mantelaußenfläche des Stator-Blechpakets. Außerdem liegen die Montagelaschen dabei in einem durch die (für die Metalllaschen vorgesehene) radial vorstehende Kontaktfläche des Stator-Blechpakets vorgegebenen Spalt ein. Dadurch können vorteilhafterweise die Metalllaschen des Funktionsträgers sowie die Montagelaschen des Lagerschilds in einem gemeinsamen Fertigungsschritt mit dem Stator-Blechpaket verschweißt werden. Dadurch wird die Fertigung des Elektromotors weiter vereinfacht.

In einer weiteren bevorzugten Ausführung ist das Stator-Blechpaket im bestimmungsgemäßen Endmontagezustand frei von einem das Stator-Blechpaket umfangsseitig umgebenden Statorgehäuse. Die Montagelaschen bzw. die Metalllaschen, die auf der Mantelaußenfläche aufliegen, erstrecken sich dabei zumindest in Umfangsrichtung gesehen nur lokal über die Mantelaußenfläche des Stator-Blechpakets und stellen mithin kein solches Statorgehäuse dar.

In einer alternativen und eine eigenständige Erfindung bildenden Ausführung ist der Funktionsträger lediglich formschlüssig, insbesondere mittels einer rast- oder Schnappverbindung mit dem Stator-Blechpaket verbunden.

Dazu weisen die vorstehend beschriebenen Metalllaschen beispielsweise sich in Umfangsrichtung erstreckende Einschnitte oder Vorsprünge auf, die mit insbesondere radial von dem Stator-Blechpaket vorstehenden Vorsprüngen verrasten.

Alternativ sind an dem oder in das Stator-Blechpaket von Blechlage zu Blechlage leicht versetzte Vorsprünge oder Vertiefungen ausgeformt. Diese wirken mit entsprechenden, stufen- oder zahnartig zueinander versetzten Vorsprüngen oder einer stufenartig versetzten Nut in der Metalllasche oder einer aus Kunststoff ausgeformten Haltelasche des Kunststoffgehäuses zusammen, indem die Vorsprünge bzw. Vertiefungen nach dem Schlüssel- und Schlossprinzip, optional unter geringfügig elastischen Deformation ineinander greifen.

Weiter alternativ weist das Kunststoffgehäuse (bspw. die Metalllasche oder eine einstückig ausgeformte Haltelasche, die axial über das Stator-Blechpaket übergreift) auf einer dem Stator-Blechpaket zugewandten Seite wenigstens eine Tasche auf. An dem Stator-Blechpaket oder dem B-seitigen Lagerschild ist ein T-förmiger Pin ausgeformt, der einen aus Federdraht gebildeten Clip aufnimmt. Letzterer wird gegen den Funktionsträger verschoben bis eine kleinstmögliche Schulter des Clips in einer Hinterschneidung in der Tasche einliegt.

Weiter alternativ weist das Kunststoffgehäuse eine Anzahl von Clips auf, die über einen T-förmigen Pfosten auf der Mantelaußenfläche des Stator-Blechpakets oder dem B-seitigen Lagerschild geschoben werden. Einer der Clips, insbesondere ein Schlitz in diesem, verrastet dabei mit dem Pfosten und bildet einen Formschluss in Umfangsrichtung des Stator-Blechpakets. Für eine axiale Fixierung wird anschließend der T-förmige Pfosten in Radialrichtung deformiert und klemmt dabei den Clip fest.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher dargestellt. Darin zeigen:
- Fig. 1: in einer schematischen Perspektivansicht eine elektrische Maschine,
- Fig. 2: in einer weiteren schematischen Perspektivansicht die elektrische Maschine in einem teilmontierten Zustand,

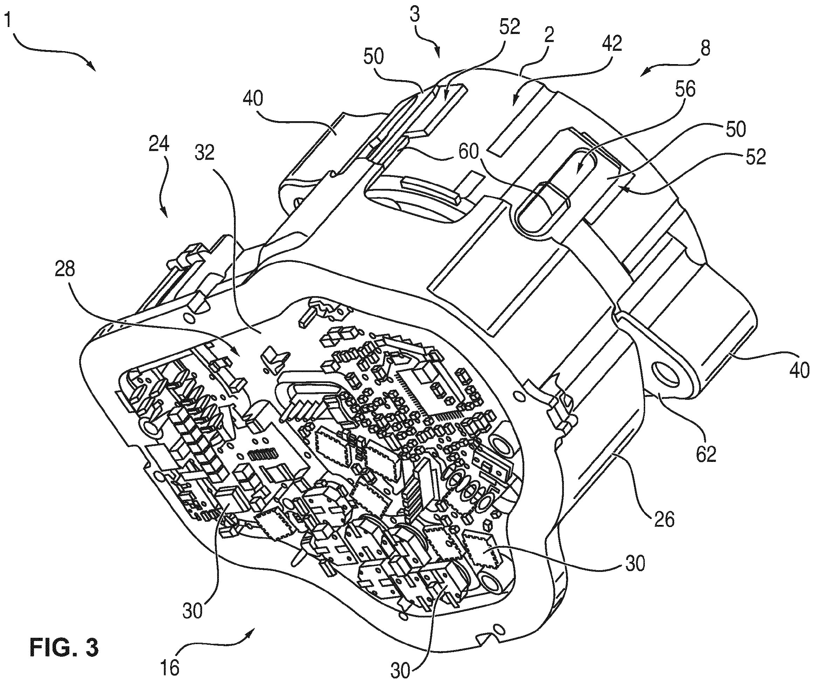

- Fig. 3: in einer wiederum weiteren schematischen Perspektivansicht die elektrische Maschine in einem teilmontierten Zustand,
- Fig. 4: in einer weiteren schematischen Perspektivansicht die elektrische Maschine in einem teilmontierten Zustand mit teilweise ausgeblendeten Bauteilen, und

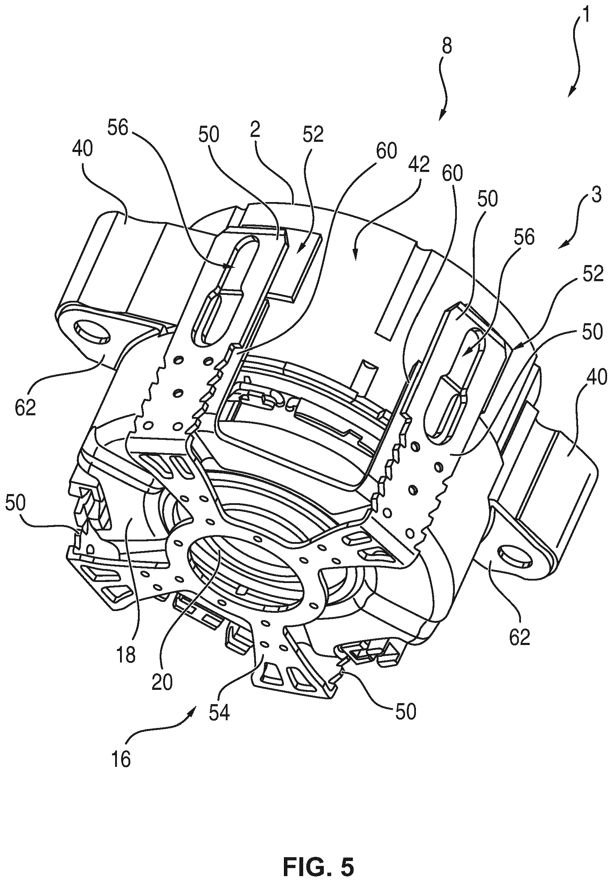

- Fig. 5: in Ansicht gemäß Fig. 4 die elektrische Maschine in einem weiteren teilmontierten Zustand.

Einander entsprechende Teile sind in allen Figuren stets mit gleichen Bezugszeichen versehen.

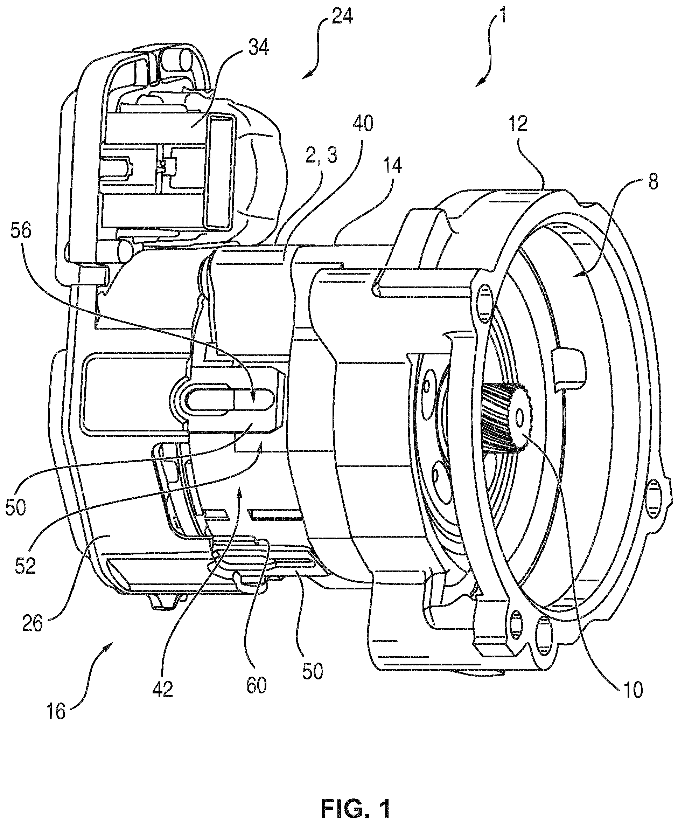

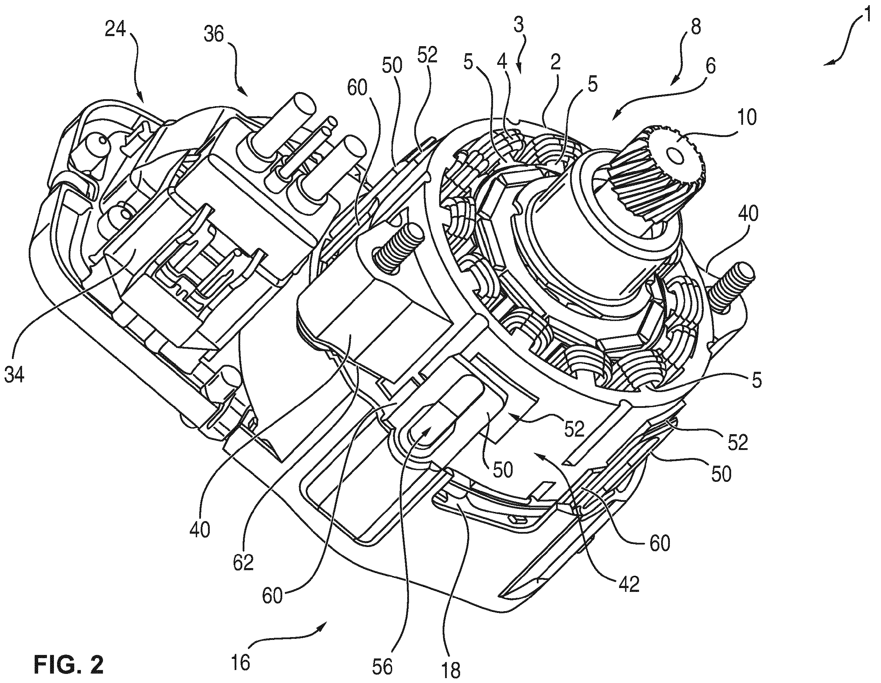

**In** Fig. 1 ist eine elektrische Maschine, im Folgenden als Elektromotor 1 bezeichnet schematisch dargestellt. Der Elektromotor 1 weist ein Stator-Blechpaket 2 auf, das Teil eines Stators 3 (s. Fig.2 ) ist. Der Stator 3 weist neben dem Stator-Blechpaket 2 auch aus einem elektrisch leitfähigen Draht gebildete Statorwicklungen 4 auf. Diese Statorwicklungen 4 sind auf eine Innenseite des im Wesentlichen rohrartigen Stator-Blechpakets 2 über "Zähne 5" des Stator-Blechpakets 4 gewickelt. Der Elektromotor 1 weist außerdem - wie in Fig. 2 zu erkennen ist - einen radial innenseitig zu dem Stator-Blechpaket 2 angeordneten Rotor 6 auf, der auf eine Abtriebsseite, im Folgenden auch als A-Seite 8 des Elektromotors 1 bezeichnet, ein Zahnrad 10 zur Kopplung mit einem dem Elektromotor 1 abtriebsseitig nachgelagerten, nicht näher dargestellten Getriebe aufweist.

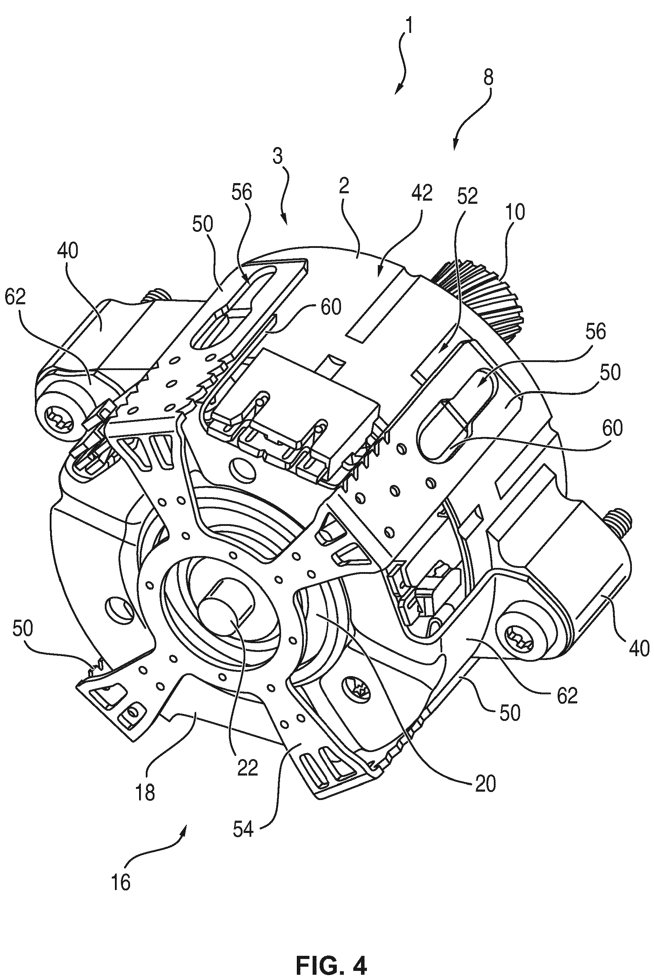

In Fig. 1 ist ein Teil eines Getriebegehäuses 12 für dieses Getriebe dargestellt. Dieses Getriebegehäuse 12 ist auf der A-Seite 8 an den Elektromotor 1 angeflanscht. Zwischen dem Getriebegehäuse 12 und dem Stator 3 ist ein A-seitiger Lagerschild 14 angeordnet, der ein nicht näher dargestelltes Lager für den Rotor 6 trägt. Auf einer der A-Seite 8 gegenüberliegenden (oder abgewandten) B-Seite 16 (oder: "Rückseite", s. Fig. 4) ist ein B-seitiger Lagerschild 18 angeordnet, der ein Radiallager 20 für den Rotor 6, konkret für eine Rotorwelle 22 des Rotors 6 angeordnet.

Der Elektromotor 1 weist außerdem einen Funktionsträger 24 auf, der auf der B-Seite 16 an dem Stator 3, konkret an dem Stator-Blechpaket 2 angeordnet ist. Der Funktionsträger 24 umfasst ein spritzgegossenes Kunststoffgehäuse 26, das einen stirnseitigen Gehäuseinnenraum 28 für eine mit elektronischen Bauelementen 30 bestückte Platine 32 bereitstellt. Diese Platine 32 bildet gemeinsam mit den elektronischen Bauelementen 30 eine Steuerungselektronik, kurz als Motorsteuerung bezeichnet, für den Elektromotor 1. Außerdem ist an dem Funktionsträger 24 ein Steckanschluss 34 für einen in Fig. 2 angedeuteten Kabelbaum 36 angeordnet. Dieser Kabelbaum 36 dient zur Stromversorgung sowie zur Zuführung von Steuersignalen zu dem Elektromotor 1.

Der Elektromotor 1 ist als Stator-gehäuseloser Motor ausgebildet. D. h. der Stator 3 ist an seiner Mantelaußenseite 42 nicht von einem Gehäuse umschlossen. Zur Halterung des A-seitigen Lagerschilds 14 sowie des nachgeordneten Getriebegehäuses 12 sind deshalb an dem Stator-Blechpaket 2 Flanschflügel 40 ausgeformt. Diese Flanschflügel 40 sind dabei durch radiale Vorsprünge lediglich eines Teils der das Stator-Blechpaket 2 bildenden Statorbleche (nicht im Einzelnen dargestellt) ausgebildet.

Um den radialen Aufbau des Elektromotors 1 insbesondere im Bereich des Stators 3 möglichst gering zu halten, ist der Funktionsträger 24 sowie der B-seitige Lagerschild 18 nicht mit dem Stator-Blechpaket 2 verschraubt oder mittels sonstiger, zusätzlicher Verbindungselemente an diesem fixiert. Der Funktionsträger 24 weist vielmehr als Verbindungsmittel vier Metalllaschen 50 auf, die durch ein im Vergleich zum Durchmesser des Stators 3 dünnwandiges Blech gebildet sind. Diese Metalllaschen 50 sind in das Kunststoffgehäuse 26 des Funktionsträgers 24 eingespritzt und liegen flach an der Mantelaußenfläche 42, konkret an um etwa die Stärke des eines den B-seitigen Lagerschild 18 bildenden Blechs erhabenen Kontaktflächen 52 des Stator-Blechpakets 2 auf. Die Metalllaschen 50 sind dabei auf die Kontaktflächen 52 des Stator-Blechpakets 2 aufgeschweißt.

Wie in Fig. 4 näher dargestellt ist, sind die Metalllaschen 50 durch jeweils einen Strahl oder Arm eines stern- oder X-artig ausgeformten Blechstanzteils 54 gebildet. Dieses Blechstanzteil 54 liegt mit seinem Zentrum stirnseitig zu dem Stator 3 in dem Kunststoffgehäuse 26 des Funktionsträgers 24 ein. Die Metalllaschen 50 sind dabei parallel zur Rotorachse 22 und der Mantelaußenfläche 42 des Stators 3 von dem Zentrum des Blechstanzteils 54 abgewinkelt. Am Freiende einer jeden Metalllasche 50 ist außerdem ein schlüssellochartiges Langloch 56 eingebracht.

Innerhalb dieses Langlochs 56 erfolgt die Schweißverbindung der jeweiligen Metalllasche 50 mit der Kontaktfläche 52 des Stator-Blechpakets 2.

Zur Montage wird der Funktionsträger 24 mit einem innenseitig an dem Kunststoffgehäuse 76 ausgeformten Anschlag (nicht dargestellt) gegen den B-seitigen Lagerschild 18 aufgeschoben und anschließend die Metalllaschen 50 verschweißt. Zur Zentrierung des Funktionsträgers 24 gegenüber dem Stator 3 weist das Kunststoffgehäuse 26 des Funktionsträgers 24 nicht näher dargestellte Zentrierrippen auf, die gegen einen bezüglich seines Außendurchmessers möglichst präzise ausgeformten Bereich des B-seitigen Lagerschilds 18 zur Anlage gebracht werden.

Der B-seitige Lagerschild 18 weist vergleichbar zu den Metalllaschen 50 parallel zur Mantelaußenfläche 42 abgewinkelte Montagelaschen 60 auf, die radial innerhalb der Metalllaschen 50, d. h. unterhalb der Metalllaschen 50 angeordnet und zur Anlage auf der Mantelaußenfläche 42 gebracht sind. Die Montagelaschen 60 werden dabei durch das schlüssellochartige Langloch 56 der Metalllaschen 50 hindurch mit der Mantelaußenfläche 42 des Stator-Blechpakets 2 verschweißt. Dadurch, dass die Montagelaschen 60 unterhalb der Metalllaschen 50 angeordnet sind, kann der in Umfangsrichtung angeordnete Zwischenraum zwischen den Montagelaschen 60 bzw. den Metalllaschen 50 genutzt werden, um beispielsweise elektrische Verbindungen zwischen der Motorsteuerung und dem Stator 3 auszubilden. Der B-seitige Lagerschild 18 weist außerdem auch zwei Flanschlaschen 62 auf, die mit den Flanschflügeln 40 verschraubt sind.

### Bezugszeichenliste

- 1: Elektromotor
- 2: Stator-Blechpaket
- 3: Stator
- 4: Statorwicklung
- 5: Zahn
- 6: Rotor
- 8: A-Seite
- 10: Zahnrad
- 12: Getriebegehäuse
- 14: Lagerschild
- 16: B-Seite
- 18: Lagerschild
- 20: Radiallager
- 22: Rotorwelle
- 24: Funktionsträger
- 26: Kunststoffgehäuse
- 28: Gehäuseinnenraum
- 30: Bauelement
- 32: Platine
- 34: Steckanschluss
- 36: Kabelbaum
- 40: Flanschflügel
- 42: Mantelaußenfläche
- 50: Metalllasche
- 52: Kontaktfläche
- 54: Blechstanzteil
- 56: Langloch
- 60: Montagelasche
- 62: Flanschlasche

## Patentansprüche

1. Elektrische Maschine (1), die als Innenläufer ausgebildet ist und die ein Stator-Blechpaket (2) sowie einen an einer Abtriebsseite (8) des Stator-Blechpakets (2) abgewandten Rückseite (16) angeordneten Funktionsträger (24) aufweist, wobei der Funktionsträger (24) ein Kunststoffgehäuse (26), in dem ein Schaltungsträger angeordnet ist, und in das Kunststoffgehäuse (26) eingebundene und von diesem in Axialrichtung des Stator-Blechpakets (2) vorstehende Verbindungsmittel (50) umfasst, wobei der Funktionsträger (24) mittels der Verbindungsmittel (50) an einer Mantelaußenfläche (42) des Stator-Blechpakets (2) in Axialrichtung stoffschlüssig an das Stator-Blechpaket (2) angebunden ist,
wobei,
die Verbindungsmittel durch mehrere Metalllaschen (50), die in das Kunststoffgehäuse (26) spritzgießtechnisch eingebettet oder nachträglich in das Kunststoffgehäuse (26) eingepresst oder mittels Ultraschall versenkt sind, gebildet sind, und wobei die Metalllaschen (50) mit dem Stator-Blechpaket (2) auf dessen Mantelaußenfläche (42) verschweißt sind,
wobei
das Stator-Blechpaket (2) für jede Metalllasche (50) eine radial vorstehende Kontaktfläche (52) aufweist, und
wobei
die Metalllaschen (50) durch in Axialrichtung abgewinkelte Strahlen eines einstückigen, sternartigen Blechstanzteils (54), dessen Zentrum stirnseitig zu dem Stator-Blechpaket (2) angeordnet ist, gebildet sind.

2. Elektrische Maschine (1) nach Anspruch 1,
wobei der Funktionsträger (24) radial gegenüber dem Stator-Blechpaket (2) zentriert ist.

3. Elektrische Maschine (1) nach Anspruch 2,
wobei der Funktionsträger (24) mittels Zentrierrippen gegenüber dem Stator-Blechpaket (2) oder einem an dessen Rückseite (16) angeordneten B-seitigen Lagerschild (18) und/oder mittels der Verbindungsmittel (50) zentriert ist.

4. Elektrische Maschine (1) nach einem der Ansprüche 1 bis 3,
wobei der Funktionsträger (24) in Axialrichtung gegen das Stator-Blechpaket (2) oder den B-seitigen Lagerschild (18) angeschlagen ist.

5. Elektrische Maschine (1) nach einem der Ansprüche 1 bis 4,
wobei der Funktionsträger (24) in Axialrichtung zu der Rückseite (16) des Stator-Blechpakets (2) oder zu dem B-seitigen Lagerschild (18) beabstandet ist.

6. Elektrische Maschine (1) nach einem der Ansprüche 1 bis 5,
mit dem B-seitigen Lagerschild (18), wobei der B-seitige Lagerschild (18) aus Metall gefertigt ist und Montagelaschen (60) aufweist, die auf der Mantelaußenseite (42) des Stator-Blechpakets (2) aufliegen und mit diesem verschweißt sind.

7. Elektrische Maschine (1) nach einem der Ansprüche 1 bis 6,
wobei das Stator-Blechpaket (2) im bestimmungsgemäßen Endmontagezustand frei von einem das Stator-Blechpaket (2) umfangsseitig umgebenden Statorgehäuse ist.

## Claims

1. Electric machine (1) which is in the form of an internal rotor and which has a laminated stator core (2) and a functional support (24) which is arranged on a rear side (16) that is remote from an output side (8) of the laminated stator core (2), wherein the functional support (24) comprises a plastics housing (26) in which there is arranged an interconnect device and connecting means (50) which are integrated into the plastics housing (26) and protrude therefrom in the axial direction of the laminated stator core (2), wherein the functional support (24) is connected by means of the connecting means (50) to the laminated stator core (2) at a lateral outer surface (42) of the laminated stator core (2) by substance-to-substance bonding in the axial direction,
wherein
the connecting means are formed by a plurality of metal lugs (50) which are embedded into the plastics housing (26) by injection moulding or are subsequently pressed into the plastics housing (26) or sunk into the plastics housing by means of ultrasound, and wherein the metal lugs (50) are welded to the laminated stator core (2) on the lateral outer surface (42) thereof,
wherein the laminated stator core (2) has a radially protruding contact surface (52) for each metal lug (50), and
wherein the metal lugs (50) are formed by beams, which are bent in the axial direction, of a one-piece, star-shaped stamped sheet-metal part (54), the centre of which is arranged at the end face relative to the laminated stator core (2).

2. Electric machine (1) according to Claim 1,
wherein the functional support (24) is centred radially relative to the laminated stator core (2).

3. Electric machine (1) according to Claim 2,
wherein the functional support (24) is centred relative to the laminated stator core (2) or a B-side bearing plate (18) arranged on the rear side (16) thereof by means of centring ribs and/or by means of the connecting means (50).

4. Electric machine (1) according to one of Claims 1 to 3,
wherein the functional support (24) abuts the laminated stator core (2) or the B-side bearing plate (18) in the axial direction.

5. Electric machine (1) according to one of Claims 1 to 4,
wherein the functional support (24) is spaced apart in the axial direction from the rear side (16) of the laminated stator core (2) or from the B-side bearing plate (18).

6. Electric machine (1) according to one of Claims 1 to 5,
having the B-side bearing plate (18), wherein the B-side bearing plate (18) is manufactured from metal and has mounting lugs (60) which lie against the lateral outer surface (42) of the laminated stator core (2) and are welded thereto.

7. Electric machine (1) according to one of Claims 1 to 6,
wherein the laminated stator core (2), in the intended final mounted state, is free of a stator housing surrounding the laminated stator core (2) on the circumferential side.

## Revendications

1. Machine électrique (1), qui est réalisée sous la forme d'un induit intérieur et qui comporte un empilement de tôles de stator (2) ainsi qu'un support fonctionnel (24) disposé sur un côté arrière (16) opposé à un côté d'entraînement (8) de l'empilement de tôles de stator (2), dans laquelle le support fonctionnel (24) comprend un boîtier en plastique (26) dans lequel est disposé un support de circuit, et des moyens de liaison (50) intégrés dans le boîtier en plastique (26) et faisant saillie de celui-ci dans la direction axiale de l'empilement de tôles de stator (2), dans laquelle le support fonctionnel (24) est attaché à l'empilement de tôles de stator (2) par liaison de matière dans la direction axiale sur une surface extérieure enveloppante (42) de l'empilement de tôles de stator (2) au moyen des moyens de liaison (50),
dans laquelle
les moyens de liaison sont formés par plusieurs pattes métalliques (50) qui sont encastrées dans le boîtier en plastique (26) par moulage par injection ou ultérieurement pressées ou enfoncées au moyen d'ultrasons dans le boîtier en plastique (26), et dans laquelle les pattes métalliques (50) sont soudées à l'empilement de tôles de stator (2) sur sa surface extérieure enveloppante (42),
dans laquelle l'empilement de tôles de stator (2) présente pour chaque patte métallique (50) une surface de contact (52) faisant saillie radialement, et
dans laquelle les pattes métalliques (50) sont formées par des rayons coudés en direction axiale d'une pièce de tôle estampée (54) en forme d'étoile, d'un seul tenant, dont le centre est disposé du côté frontal par rapport à l'empilement de tôles de stator (2).

2. Machine (1) électrique selon la revendication 1, dans laquelle le support fonctionnel (24) est centré radialement par rapport à l'empilement de tôles de stator (2).

3. Machine (1) électrique selon la revendication 2, dans laquelle le support fonctionnel (24) est centré au moyen de nervures de centrage par rapport à l'empilement de tôles de stator (2) ou à un flasque (18) côté B disposé sur la face arrière (16) de celui-ci et/ou au moyen des moyens de liaison (50).

4. Machine (1) électrique selon l'une quelconque des revendications 1 à 3,
dans laquelle le support fonctionnel (24) est monté en direction axiale contre l'empilement de tôles de stator (2) ou le flasque (18) côté B.

5. Machine (1) électrique selon l'une quelconque des revendications 1 à 4,
dans laquelle le support fonctionnel (24) est espacé en direction axiale de la face arrière (16) de l'empilement de tôles de stator (2) ou du flasque (18) côté B.

6. Machine (1) électrique selon l'une quelconque des revendications 1 à 5,
comprenant le flasque (18) côté B, dans laquelle le flasque (18) côté B est fabriqué en métal et présente des pattes de montage (60) qui reposent sur la face extérieure enveloppante (42) de l'empilement de tôles de stator (2) et sont soudées à celui-ci.

7. Machine (1) électrique selon l'une quelconque des revendications 1 à 6,
dans laquelle l'empilement de tôles de stator (2) est dépourvu, à l'état de montage final conforme à sa destination, d'un boîtier de stator entourant de manière périphérique l'empilement de tôles de stator (2).
